# EUROPÄISCHE PATENTSCHRIFT

(11) **EP 2 659 232 B1**
(45) Veröffentlichungstag und Bekanntmachung des Hinweises auf die Patenterteilung: **04.03.2015**
(21) Anmeldenummer: 11790891.3
(22) Anmeldetag: 31.10.2011
(51) Int. Cl.: G01D 5/14

(54) **VERFAHREN UND VORRICHTUNG ZUR BESTIMMUNG EINER ERKENNUNGSSCHWELLE**
METHOD AND APPARATUS FOR DETERMINING A RECOGNITION THRESHOLD
PROCÉDÉ ET DISPOSITIF POUR DÉTERMINER UN SEUIL DE DÉTECTION

(30) Priorität: 27.12.2010 DE 102010064203
(43) Veröffentlichungstag der Anmeldung: 06.11.2013
(73) Patentinhaber: Robert Bosch GmbH, 70442 Stuttgart (DE)
(72) Erfinder: ROLEW, Eduard, 70499 Stuttgart (DE); SCHMIDT, Verena, 92681 Erbendorf (DE); OPITZ, Bernhard, 71229 Leonberg (DE)
(86) Internationale Anmeldenummer: PCT/EP2011/069148
(87) Internationale Veröffentlichungsnummer: WO 2012/089366

(56) Entgegenhaltungen:
- DE-A1- 10 154 155
- DE-C2- 3 638 622
- GB-A- 2 357 849

## Beschreibung

Die vorliegende Erfindung bezieht sich auf ein Verfahren zur Bestimmung einer Erkennungsschwelle, eine Vorrichtung zur Bestimmung einer Erkennungsschwelle, sowie ein Computerprogrammprodukt gemäß den Hauptansprüchen.

Ein herkömmlicher Phasengeber erfasst die Geometrie eines Geberrades. Hierfür wird ein Signal ausgewertet, das eine magnetische Größe repräsentiert, die durch den Sensor aufgezeichnet wird, wenn ein Zahn an dem Sensor vorbeigeführt wird. Der Sensor erkennt das Vorbeiführen des Zahns und "schaltet", d.h. erkennt dieses Vorbeiführen bei einem Überschreiten eines vorher definierten Anteils einer Signalamplitude im vom Sensor erfassten magnetischen Signal. Da sich die Signalamplitude und somit der Schaltpegel über Temperatur, Luftspalt oder Alterung ändert, muss die Schaltschwelle ständig während des Betriebs nachgeregelt werden. Heutige Sensoren verwenden beim Einschalten eine vorher einprogrammierte Schaltschwelle, die über alle Betriebszustände hinweg sicher stellt, dass der Sensor Zahn und Lücke beim Einschalten erkennt. Dies erlaubt die sogenannte True-Power-On-Funktion, bei der der Sensor beim Einschalten erkennt, ob er vor einem Zahn oder Lücke steht. Anschließend erlernt oder trainiert der Sensor die optimale Schaltschwelle für die Erkennung eines Zahn-Lückenpaares in Abhängigkeit von der aktuell vorhandenen magnetischen Signalamplitude.

Die Druckschrift DE 36 38 622 C2 beschreibt einen Phasengeber, der ein eigenes Magnetfeld über einen Magnet aufbaut und Änderungen des Magnetfelds registriert.

Aus der GB 2 357 849 A ist ein Verfahren zur Bestimmung einer ersten und zweiten Erkennungsschwelle zur Erkennung eines Vorliegens von Zähnen und Zahnlücken eines Positionsgebers vor einem Sensor bekannt, bei dem ein Sensorsignal eingelesen wird, das einen zeitlichen Verlauf eines gemessenen Magnetfeldes repräsentiert, wenn Zähne und Zahnlücken des Positionsgebers an dem Sensor vorbeigeführt werden.

### Offenbarung der Erfindung

Vor diesem Hintergrund wird mit der vorliegenden Erfindung ein Verfahren zur Bestimmung einer Erkennungsschwelle, weiterhin eine Vorrichtung zur Bestimmung einer Erkennungsschwelle, sowie schließlich ein entsprechendes Computerprogrammprodukt gemäß den Hauptansprüchen vorgestellt. Vorteilhafte Ausgestaltungen ergeben sich aus den jeweiligen Unteransprüchen und der nachfolgenden Beschreibung.

Die vorliegende Erfindung schafft ein Verfahren zur Bestimmung einer ersten und einer zweiten Erkennungsschwelle zur Erkennung eines Vorliegens von Zähnen oder Zahnlücken eines Positionsgebers vor einem Sensor, wobei das Verfahren die folgenden Schritte aufweist:

Einlesen eines Sensorsignals, das einen zeitlichen Verlauf eines gemessenen Magnetfeldes repräsentiert, wenn Zähne und Zahnlücken des Positionsgebers an dem Sensor vorbeigeführt werden;

Ermitteln eines ersten Wertes auf der Basis eines minimalen Wertes des Sensorsignals und eines ersten Wertes auf der Basis eines maximalen Wertes des Sensorsignals innerhalb eines vordefinierten Zeitintervalls aus dem Sensorsignal;

Berechnen eines Differenzbetragwerts, der einen vorbestimmten Prozentsatz von einer Differenz zwischen dem ersten Wert auf der Basis des zumindest einen maximalen Werts und dem ersten Wert auf der Basis des zumindest einen minimalen Werts des Sensorsignals repräsentiert;

Bestimmen der ersten Erkennungsschwelle, so dass die erste Erkennungsschwelle einen Wert repräsentiert, der einem Ergebnis einer Addition des Differenzbetragwerts mit dem ersten Wert auf der Basis des minimalen Werts des Sensorsignals entspricht;

Ermitteln eines zweiten Wertes auf der Basis eines minimalen Wertes des Sensorsignals und eines zweiten Wertes auf der Basis eines maximalen Wertes des Sensorsignals innerhalb eines dem vordefinierten Zeitintervall nachfolgenden zweiten vordefinierten Zeitintervalls aus dem Sensorsignal;

Berechnen eines zweiten Differenzbetragwerts, der einem zweiten vorbestimmten Prozentsatz von einer Differenz zwischen dem zweiten Wert auf Basis des maximalen Werts und dem zweiten Wert auf der Basis des minimalen Werts des Sensorsignals repräsentiert; und

Bestimmen der von der ersten Erkennungsschwelle unterschiedlichen zweiten Erkennungsschwelle, so dass die zweite Erkennungsschwelle einen Wert repräsentiert, der einem Ergebnis einer Addition des zweiten Differenzbetragwerts mit dem zweiten Wert auf der Basis des minimalen Wertes des Sensorsignals entspricht.

Ferner schafft die vorliegende Erfindung eine Vorrichtung zur Bestimmung einer ersten und einer zweiten Erkennungsschwelle zur Erkennung eines Vorliegens von Zähnen oder Zahnlücken eines Positionsgebers vor einem Sensor, wobei die Vorrichtung folgende Merkmale aufweist:
eine Schnittstelle zum Einlesen eines Sensorsignals, das einen zeitlichen Verlauf eines gemessenen Magnetfeldes repräsentiert, wenn Zähne und Zahnlücken des Positionsgebers an dem Sensor vorbeigeführt werden;
eine Einheit zum Ermitteln eines ersten Wertes auf der Basis eines minimalen Wertes des Sensorsignals und eines ersten Wertes auf der Basis eines maximalen Wertes des Sensorsignals innerhalb eines vordefinierten Zeitintervalls aus dem Sensorsignal und zum Ermitteln eines zweiten Wertes auf der Basis eines minimalen Wertes des Sensorsignals und eines zweiten Wertes auf der Basis eines maximalen Wertes des Sensorsignals innerhalb eines dem vordefinierten Zeitintervall nachfolgenden zweiten vordefinierten Zeitintervalls aus dem Sensorsignal;
eine Einheit zum Berechnen eines Differenzbetragwerts, der einen vorbestimmten Prozentsatz von einer Differenz zwischen dem ersten Wert auf der Basis des zumindest einen maximalen Werts und einem ersten Wert auf der Basis des zumindest einen minimalen Werts des Sensorsignals repräsentiert und zum Berechnen eines zweiten Differenzbetragwerts, der einem zweiten vorbestimmten Prozentsatz von einer Differenz zwischen dem zweiten Wert auf Basis des maximalen Werts und dem zweiten Wert auf der Basis des minimalen Werts des Sensorsignals repräsentiert; und
eine Einheit zum Bestimmen der ersten Erkennungsschwelle, so dass die erste Erkennungsschwelle einen Wert repräsentiert, der einem Ergebnis einer Addition des Differenzbetragwerts mit dem Wert auf der Basis des minimalen Werts des Sensorsignals entspricht und zum Bestimmen der von der ersten Erkennungsschwelle unterschiedlichen zweiten Erkennungsschwelle, so dass die zweite Erkennungsschwelle einen Wert repräsentiert, der einem Ergebnis einer Addition des zweiten Differenzbetragwerts mit dem zweiten Wert auf der Basis des minimalen Wertes des Sensorsignals entspricht.

Die Vorrichtung ist somit ausgebildet, um die Schritte des erfindungsgemäßen Verfahrens durchzuführen bzw. umzusetzen. Insbesondere kann die Vorrichtung Einrichtungen aufweisen, die ausgebildet sind, um je einen Schritt des Verfahrens auszuführen. Auch durch diese Ausführungsvariante der Erfindung in Form einer Vorrichtung kann die der Erfindung zugrunde liegende Aufgabe schnell und effizient gelöst werden.

Unter einer Vorrichtung kann vorliegend ein elektrisches oder elektronisches Gerät verstanden werden, das Sensorsignale verarbeitet und in Abhängigkeit davon Steuersignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der beispielsweise auf einem maschinenlesbaren Träger wie einem Halbleiterspeicher, einem Festplattenspeicher oder einem optischen Speicher gespeichert ist und zur Durchführung des Verfahrens nach einem der vorstehend beschriebenen Ausführungsformen verwendet wird, wenn das Programm auf einem Steuergerät oder einer Vorrichtung ausgeführt wird.

Ein Positionsgeber kann gemäß dem hier beschriebenen Ansatz ein Bauteil sein, das Ausprägungen wie beispielsweise Zähne oder Nocken aufweist, die beispielsweise ein in unmittelbarer Nähe vorhandenes oder ausgebildetes Magnetfeld durch ihre örtliche Veränderung, d.h. durch die Veränderung von Elemente mit ferromagnetischen Eigenschaften beeinflussen können. Ebenso kann ein Positionsgeber über seine Ausdehnung dauermagnetische Eigenschaften aufweisen, die einer Umgebung des Positionsgebers ein mit dem Positionsgeber bewegliches Magnetfeld aufprägen. Unter einem Positionsgeber kann beispielsweise eine Zahnstange oder ein Geberrad verstanden werden. Ein Geberrad kann eine drehbar angeordnete Scheibe mit Ausnehmungen auf einem Rand des Geberrads sein, eine Zahnstange kann über eine Erstreckungsrichtung der Zahnstange die Ausnehmungen aufweisen. Weist das Geberrad dauermagnetische Eigenschaften auf, so kann es ein mit dem Geberrad drehendes Magnetfeld ausprägen, dass je nach Winkel der Ausnehmungen oder Zähne an bestimmten Positionen veränderlich ist. Das Geberrad kann mit einer Achse fest verbunden sein, deren Drehbewegung überwacht werden soll. Weist die Zahnstange dauermagnetische Eigenschaften auf, so kann die Zahnstange ein mit der Zahnstange bewegliches Magnetfeld ausprägen. Eine Änderung des Magnetfelds kann von einem Magnetfeldsensor, beispielsweise einem Hall-Sensor aufgenommen werden und in ein elektrisches Signal umgewandelt werden. Der Magnetfetdsensor kann ausgebildet sein, ein eigenes Magnetfeld zu erzeugen. Eine Veränderung in einem Bezug des Magnetfelds zu einem ferromagnetischen Gegenstand, wie dem Geberrad oder der Zahnstange kann von dem Sensor registriert werden. Ebenso kann ein Geberrad mit dauermagnetischen Eigenschaften von einem Sensor ohne Magnet erfasst werden. Auch kann ein ferromagnetisches Geberrad und einen Sensor mit integrierten Magneten oder ein magnetisiertes Geberrad (sog. Multipol-Geberrad) verwendet werden, welches mit einem Sensor ohne Magnet vermessen wird.

Der Magrietfeldsensor kann relativ zum Geberrad oder der Zahnstange fest angeordnet sein. Ebenso kann der Magnetfeldsensor drehbar oder beweglich angeordnet sein. Dann kann das Geberrad ein feststehender Geberring sein.

Ein Signal des Sensors oder Sensorsignal repräsentiert eine Veränderung des Magnetfelds durch eine Relativbewegung zwischen Sensor und einem Element des Positionsgebers. Eine Bewegung kann eine zurückgelegte Strecke über eine bestimmte Zeit sein. Daher kann das Sensorsignal einen zeitlichen Verlauf des Magnetfelds repräsentieren. Der "Wert auf der Basis eines minimalen Wertes" kann ein Berechnungsbasisminimalwert sein, der als Berechnungsrundlage in nachfolgenden Schritten verwendet wird und der unter Verwendung eines minimalen Wertes in dem angegebenen Zeitintervall bestimmt wurde. Dieser Berechnungsbasisminimalwert kann beispielsweise ein einzelner minimaler Wert sein, der in dem genannten Zeitintervall aufgetreten ist oder ein über mehrere Zyklen gemittelter minimaler Wert sein, wobei die Mittelung über minimale Werte erfolgt, die zu bestimmten Zeitpunkten oder in bestimmten Zeitintervallen auftreten. Als ein vorbestimmtes Zeitintervall kann ein Bereich um eine zu erwartende Signalflanke im Sensorsignal verstanden werden. Beispielsweise kann sich dieses Zeitintervall von einigen Mikrosekunden bis einigen Millisekunden erstrecken. Der "Wert auf der Basis eines maximalen Wertes" kann ebenfalls ein Berechnungsbasismaximalwert sein, der als Berechnungsrundlage in nachfolgenden Schritten verwendet wird und der unter Verwendung eines maximalen Wertes in dem angegebenen Zeitintervall bestimmt wurde. Dieser Berechnungsbasismaximalwert kann beispielsweise ein einzelner maximaler Wert sein, der in dem genannten Zeitintervall aufgetreten ist oder der beispielsweise ein über mehrere Zyklen gemittelter maximaler Wert ist, wobei die Mittelung über maximale Werte erfolgt, die zu bestimmten Zeitpunkten oder in bestimmten Zeitintervallen auftreten. Weiterhin kann der Differenzbetragwert ein Wert sein, der sich ergibt, wenn die Differenz zwischen dem Wert auf der Basis des maximalen Wertes und dem Wert auf der Basis des minimalen Wertes des Sensorsignals ergibt mit einem bestimmten Prozentsatz multipliziert wird. Dieser Differenzbetrag stellt dabei einen Wert dar, der beispielsweise zu dem Wert auf der Basis des minimalen Wertes addiert wird, um die Erkennungsschwelle zu erhalten. Somit wird für die Erkennungsschwelle ein Wert bestimmt, der um einen bestimmten Anteil der Differenz zwischen dem Wert auf der Basis des maximalen Wertes und dem Wert auf der Basis des minimalen Wertes liegt, erhöht ist.

Die Erfindung basiert auf der Erkenntnis, dass eine Größe eines Luftspalts zwischen einem Sensor und zu sensierenden Ausprägungen einen Signalpegel beeinflusst. Verläuft der Luftspalt entlang einer Abtaststrecke ungleichmäßig, so weist das resultierende Signal Schwankungen auf. Beispielsweise führen Rundlaufabweichungen an einem Positionsgeber oder Geberrad zu Schwankungen eines von Zähnen auf dem Geberrad als Positionsgeber hervorgerufenen Signals. Ebenfalls können Zähne z.B. auf einer linearen Gebereinheit als Positionsgeber angeordnet sein. Dann können unterschiedlich hohe Zähne zu Signalstärkeschwankungen führen. Da das Signal zwischen den Zähnen und dazwischenliegenden Lücken keine unendliche Steigung aufweist, ergibt sich daraus ein Positionsfehler bei einer Erfassung auf einem festen Pegel oder einer festgelegten Signalstärke. Im Fall des Geberrads als Positionsgeber ergibt sich aus der Rundlaufabweichung ein Winkelfehler im Signal, bei der linearen Einheit als Positionsgeber ergibt sich ein linearer Positionsfehler. Daher ist es vorteilhaft an jedem Zahn am optimalen Punkt d.h. Pegel des zugehörigen Sensorsignals das Passieren des Zahns am Sensor zu erfassen. Dazu kann beispielsweise für jeden Zahn ein individueller Wert als Schwelle (die hier als Erkennungsschwelle bezeichnet ist) ermittelt werden, bei dem das Passieren eines bestimmten Zahns am Sensor erkannt wird. Im Signal weist dieser Messpunkt bzw. Schwellwert meist über mehrere Messreihen/Durchläufe oder Umdrehungen die geringste Streuung im Sensorsignal auf und ist daher am besten für eine Messung geeignet Um die individuelle Höhe eines Zahnes aus dem Signal des Sensors zu messen kann der Signalpegel erfasst werden, der einer der vorangehenden und/oder nachfolgenden Lücke zugeordnet ist und relativ dazu der Signalpegel des Zahns. Der vorteilhafteste Punkt zum Messen kann an jedem Zahn das gleiche Verhältnis eines Signals, das einen Zahnfuß repräsentiert zu einem Signal sein, das einen Zahnkopf repräsentiert. Dabei können absolut unterschiedliche Werte für die Erkennungsschwelle für die einzelnen Zahn-Lücke- oder Lücke-Zahn-Paare bestimmt werden, wobei durch die Wahl des vorbestimmten Prozentsatzes sichergestellt ist, dass bei den jeweiligen Paaren eine Erkennungsschwelle verwendet wird, die eine möglichst geringe Schwankungsbreite aufweist. Insbesondere kann für unterschiedliche der genannten Paare ein gleicher vorbestimmter Prozentsatz gewählt werden, der sich als Wert ausgezeichnet hat, an dem das Sensorsignal eine geringe Schwankungsbreite aufweist. Insbesondere kann bei der vorliegenden Erfindung die Anzahl der Zähne bekannt sein, so dass für unterschiedliche Zähne des Positionsgebers unterschiedliche Erkennungsschwellen bestimmt werden können. Hierdurch kann sichergestellt werden, dass unterschiedliche Zähne unter Verwendung von unterschiedlichen Erkennungsschwellen sehr präzise erkannt werden können. Auf diese Weise lässt sich auch sehr genau das Vorliegen eines Zahns oder einer Lücke vor dem Sensor ermitteln, wobei die Kenntnis der Anzahl von Zähnen des Positionsgebers es ermöglicht, die jeweilig zu verwendende Erkennungsschwelle bzw. Schaltschwelle aus den verschiedenen Schaltschwellen auszuwählen, auf deren Basis der zu erwartende Zahn bestimmt wird.

Die vorliegende Erfindung bietet den Vorteil, dass für unterschiedliche Sensorsignalabschnitte, die das Passieren von unterschiedlichen Zähnen und/oder Lücken vor dem Sensor repräsentieren oder entsprechenden Abständen dieser Zähne oder Lücken von dem Sensor repräsentieren, zu unterschiedlichen Erkennungsschwellen führen. Dies ermöglicht vorteilhaft, im nachfolgenden Betrieb des Sensors ist diese einzelnen unterschiedlichen Erkennungsschwellen für die Erkennung der unterschiedlichen Zähne zu verwenden, wobei eine hohe Erkennungspräzision möglich wird.

Günstig ist es ferner, wenn im Schritt des Berechnens des zweiten Differenzbetragwerts als zweiter vorbestimmter Prozentsatz ein Wert verwendet wird, der dem vorbestimmten Prozentsatz entspricht, der im Schritt des Berechnens des Differenzbetragwerts verwendet wird. Eine derartige Ausführungsform der vorliegenden Erfindung bietet den Vorteil einer sehr einfachen Umsetzbarkeit, da lediglich ein einziger bestimmter Prozentsatz zur Bestimmung des jeweiligen Differenzbetragwertes verwendet werden braucht. Zugleich kann dieser bestimmte Prozentsatz auch in Bezug auf Erfahrungswerte optimiert sein, an welcher Stelle der Signalverlauf zwischen dem minimalen Wert und dem maximalen Werte (bzw. den mit gemittelten minimalen Wert und dem gemittelten maximalen Wert) im vorbestimmten Zeitintervall die geringste Schwankungsbreite aufweist.

Um sicherzustellen, dass das vorstehend vorgestellte Verfahren lediglich dann eine tatsächlich verwendbare Erkennungsschwelle ermöglicht und nicht auch bei sehr kleinen (beispielsweise Messfehler-bedingten) Signalschwankungen schon zu einer Bestimmung einer Erkennungsschwelle führt, kann im ersten Schritt des Ermittelns der erste Wert auf der Basis des minimalen Wertes des Sensorsignals und/oder der erste Wert auf der Basis des maximalen Wertes des Sensorsignals und/oder im zweiten Schritt des Ermittelns der zweite Wert auf der Basis des minimalen Wertes und/oder der zweiten Wert auf der Basis des maximalen Wertes dann verworfen werden, wenn eine Differenz zwischen dem ersten Wert auf der Basis des minimalen Wertes und dem ersten Wert auf der Basis des maximalen Wertes und/oder eine Differenz zwischen dem zweiten Wert auf der Basis des minimalen Wertes und dem zweiten Wert auf der Basis des maximalen Wertes kleiner als ein vorbestimmter Differenzschwellwert ist.

Besonders robust ist das Verfahren, wenn vor der Bestimmung der Erkennungsschwelle eine Mittelung der minimalen Werte und eine Mittelung der maximalen Werte des Signalverlaufes in Zeitfenster erfolgt, die einen speziellen Zahn des Positionsgebers betreffen. Hierzu sollte die Anzahl n der Zähne des Positionsgebers bekannt sein. Im Signalverlauf wird dann ein Muster aus aufeinanderfolgenden hohen Werten (die die einzelnen Zähe repräsentieren) und dazwischen liegenden niedrigen Werten (die die Lücken repräsentieren) erhalten. Die Mittelung kann dann derart durchgeführt werden, dass dann im Signalverlauf der Wert auf der Basis des minimalen Wertes durch eine Mittelung der minimalen Werte jeder n-ten Gruppen von niedrigen Werten und der Wert auf der Basis des maximalen Wertes durch eine Mittelung der maximalen Werte jeder n-ten Gruppe von niedrigen Werten durchgeführt wird. Wenn ein Positionsgeber mit einer Anzahl von n Zähnen in Kombination mit dem Sensor verwendet wird, ist es somit vorteilhaft, wenn im Schritt des Einlesens ein Sensorsignal mit einer Mehrzahl von Gruppen von kleinen Werten und einer Mehrzahl von Gruppen von großen Werte eingelesen wird und wobei im Schritt des Ermittelns der Wert auf der Basis eines minimalen Wertes des Sensorsignals durch eine Mittelwertbildung der minimalen Werte jeder n-ten Gruppe von kleinen Werten und der Wert auf der Basis eines maximalen Wertes des Sensorsignals durch eine Mittelwertbildung der maximalen Werte jeder n-ten Gruppe von großen Werten erfolgt.

Um eine sehr präzise Positionsbestimmung des Zahns des Positionsgebers zu ermöglichen kann das hier vorgestellte Verfahren auch die zuvor bestimmte erste und/oder zweite Erkennungsschwelle einsetzen. Hierdurch kann ein adaptives Sensorsystem realisiert werden, das einerseits eine Möglichkeit zur Bestimmung der optimalen Erkennungsschwelle (im Gegensatz zu einer werksseitig voreingestellten Erkennungsschwelle) und andererseits der Anpassung der Erkennungsschwelle aufweist, die beispielsweise bei einer Alterung oder einem Verschleiß eine Neujustierung der Erkennungsschwelle ermöglicht. Hierzu kann das Verfahren somit ferner einen Schritt des Detektierens eines Zahns des Positionsgebers aufweisen, wenn das Sensorsignal einen Wert aufweist, der größer ist, als die Erkennungsschwelle oder die zweite Erkennungsschwelle.

Um ein schnelles Einlernen bzw. ein Erkennen von Zähnen des Positionsgebers zeitnah zu einem Einschaltvorgang des Sensors zu ermöglichen, bei dem möglicherweise noch keine zuvor bestimmte Erkennungsschwelle vorliegt, kann die Erkennung von Zähnen auf der Basis eines beispielsweise für alle Zähne gleichen einheitlichen Initialschwellwertes erfolgen. Hierzu kann das Verfahren ferner vor dem Schritt des Ermittelns einen Schritt des Erfassens eines Zahns des Positionsgebers aufweisen, wobei der Zahn des Positionsgebers dann erfasst wird, wenn das Sensorsignal einen Wert aufweist, der größer als ein Initialschwellwert ist.

Die Erfindung wird anhand der beigefügten Zeichnungen beispielhaft näher erläutert. Es zeigen:
- Fig. 1: ein Ablaufdiagramm eines Verfahrens gemäß einem Ausführungsbeispiel der vorliegenden Erfindung;
- Fig. 2: ein Blockschaltbild eines schematisch dargestellten Fahrzeugs mit einer Vorrichtung gemäß einem Ausführungsbeispiel der vorliegenden Erfindung;
- Fig. 3: eine Darstellung eines magnetischen Feldstärkenverlaufs und eines korrespondierenden Ausgangssignalverlaufs über einen Erfassungswinkel;
- Fig. 4: eine Darstellung mehrerer magnetischer Feldstärkenverläufe eines zyklisch wiederholt aufgenommenen Sensorsignals über einen Erfassungswinkel und einen minimalen Schwellenwert, welche zur Ausführung der vorliegenden Erfindung verwendet werden können;
- Fig. 5: eine Darstellung mehrerer magnetischer Feldstärkenverläufe eines zyklisch wiederholt aufgenommenen Sensorsignals mit einer Amplitudenschwankung über einen Erfassungswinkel und einen einheitlichen Schwellenwert, welche zur Ausführung der vorliegenden Erfindung verwendet werden können;
- Fig. 6: eine Darstellung mehrerer magnetischer Feldstärkenverläufe eines zyklisch wiederholt aufgenommenen Sensorsignals über einen Erfassungswinkelbereich an einem Zahn und einen optimalen Schwellenwert für den Zahn, welche zur Ausführung der vorliegenden Erfindung verwendet werden können;
- Fig. 7: eine Darstellung mehrerer magnetischer Feldstärkenverläufe eines zyklisch wiederholt aufgenommenen Sensorsignals mit einer Amplitudenschwankung über einen Erfassungswinkel und mehrere optimierte Schwellenwerte, welche zur Ausführung der vorliegenden Erfindung verwendet werden können;
- Fig. 8: eine Darstellung mehrerer normierter magnetischer Feldstärkenverläufe eines zyklisch wiederholt aufgenommenen Sensorsignals über einen Erfassungswinkelbereich, welche zur Ausführung der vorliegenden Erfindung verwendet werden können;
- Fig. 9: ein Ablaufdiagramm eines weiteren Verfahrens zur Bestimmung einer Position von Zähnen und/oder Zahnlücken eines Positionsgebers gemäß einem Ausführungsbeispiel der vorliegenden Erfindung;
- Fig. 10: ein Geberrad zur Beeinflussung eines Magnetfelds über einen Drehwinkel mit einer Nummerierung von Zähnen gemäß einem Ausführungsbeispiel der vorliegenden Erfindung; und
- Fig. 11: das Geberrad gemäß Fig. 10 mit einer weiteren Nummerierung von Zähnen gemäß einem Ausführungsbeispiel der vorliegenden Erfindung.

Gleiche oder ähnliche Elemente können in den Figuren durch gleiche oder ähnliche Bezugszeichen versehen sein, wobei auf eine wiederholte Beschreibung verzichtet wird. Ferner enthalten die Figuren der Zeichnungen, deren Beschreibung sowie die Ansprüche zahlreiche Merkmale in Kombination. Einem Fachmann ist dabei klar, dass diese Merkmale auch einzeln betrachtet werden oder sie zu weiteren, hier nicht explizit beschriebenen Kombinationen zusammengefasst werden können. Weiterhin ist die Erfindung in der nachfolgenden Beschreibung eventuell unter Verwendung von unterschiedlichen Maßen und Dimensionen erläutert, wobei die Erfindung nicht auf diese Maße und Dimensionen eingeschränkt zu verstehen ist. Ferner können erfindungsgemäße Verfahrensschritte wiederholt sowie in einer anderen als in der beschriebenen Reihenfolge ausgeführt werden. Umfasst ein Ausführungsbeispiel eine "und/oder"-Verknüpfung zwischen einem ersten Merkmal/Schritt und einem zweiten Merkmal/Schritt, so kann dies so gelesen werden, dass das Ausführungsbeispiel gemäß einer Ausführungsform sowohl das erste Merkmal / den ersten Schritt als auch das zweite Merkmal /den zweiten Schritt und gemäß einer weiteren Ausführungsform entweder nur das erste Merkmal /Schritt oder nur das zweite Merkmal /Schritt aufweist.

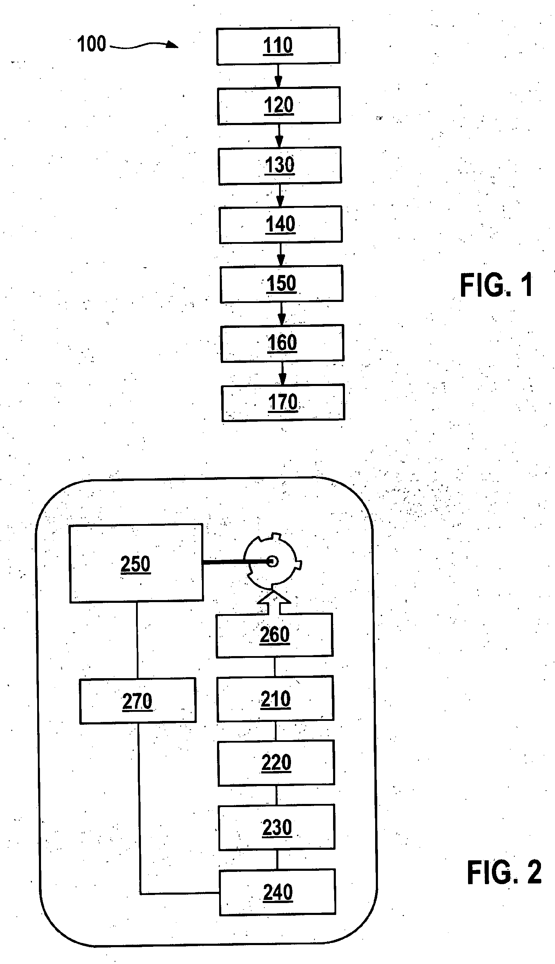

Fig. 1 zeigt ein Ablaufdiagramm eines Verfahrens 100 zur Bestimmung einer ersten und einer zweiten Erkennungsschwelle zur Erkennung eines Vorliegens von Zähnen oder Zahnlücken eines Positionsgebers vor einem Sensor gemäß einem Ausführungsbeispiel der vorliegenden Erfindung. Das Verfahren weist einen Schritt 110 des Einlesens, einen Schritt 120 des Ermittelns, einen Schritt 130 des Berechnens, sowie einen Schritt 140 des Bestimmens auf. Im Schritt 110 des Einlesens wird ein Sensorsignal eingelesen. Das Sensorsignal repräsentiert beispielsweise einen zeitlichen Verlauf eines gemessenen Magnetfelds. Um dieses Signal zu erhalten, wird in einem vorausgehenden Messschritt, der nicht zwingend Teil des hier vorgestellten Verfahrens sein braucht, Zähne und Zahnlücken eines Positionsgebers, insbesondere eines Geberrads oder einer Zahnstange an einem Sensor vorbeigeführt. Im Schritt 120 des Ermittelns werden ein Wert auf der Basis eines minimalen Wertes des Sensorsignals und ein Wert auf der Basis eines maximalen Wertes des Sensorsignals innerhalb eines vordefinierten Zeitintervalls aus dem Sensorsignal ermittelt. Im Schritt 130 des Berechnens wird ein Differenzbetragwert berechnet, der einen vorbestimmten Prozentsatz von einer Differenz zwischen dem Wert auf der Basis des zumindest einen maximalen Werts und einem Wert auf der Basis des zumindest einen minimalen Werts des Sensorsignals repräsentiert. Im Schritt 140 des Bestimmens wir die Erkennungsschwelle derart bestimmt, so dass die Erkennungsschwelle einen Wert repräsentiert, der einem Ergebnis einer Addition des Differenzbetragwerts mit dem Wert auf der Basis des minimalen Werts des Sensorsignals entspricht. Diese Schritte werden günstigerweise für alle Zahn-Lücke-Paare bzw. Lücke-Zahn-Paare wiederholt. Insbesondere ist somit ein Schritt des Ermittelns 150 eines zweiten Wertes auf der Basis eines minimalen Wertes des Sensorsignals und eines zweiten Wertes auf der Basis eines maximalen Wertes des Sensorsignals innerhalb eines dem vordefinierten Zeitintervall nachfolgenden zweiten vordefinierten Zeitintervalls aus dem Sensorsignal vorgesehen. Auch ist ein Schritt des Berechnens 160 eines zweiten Differenzbetragwerts vorgesehen, der einem zweiten vorbestimmten Prozentsatz von einer Differenz zwischen dem zweiten Wert auf Basis des maximalen Werts und dem zweiten Wert auf der Basis des minimalen Werts des Sensorsignals repräsentiert. Schließlich umfasst das Verfahren einen Schritt des Bestimmens 170 einer von der ersten Erkennungsschwelle unterschiedlichen zweiten Erkennungsschwelle, so dass die zweite Erkennungsschwelle einen Wert repräsentiert, der einem Ergebnis einer Addition des zweiten Differenzbetragwerts mit dem zweiten Wert auf der Basis des minimalen Wertes des Sensorsignals entspricht.

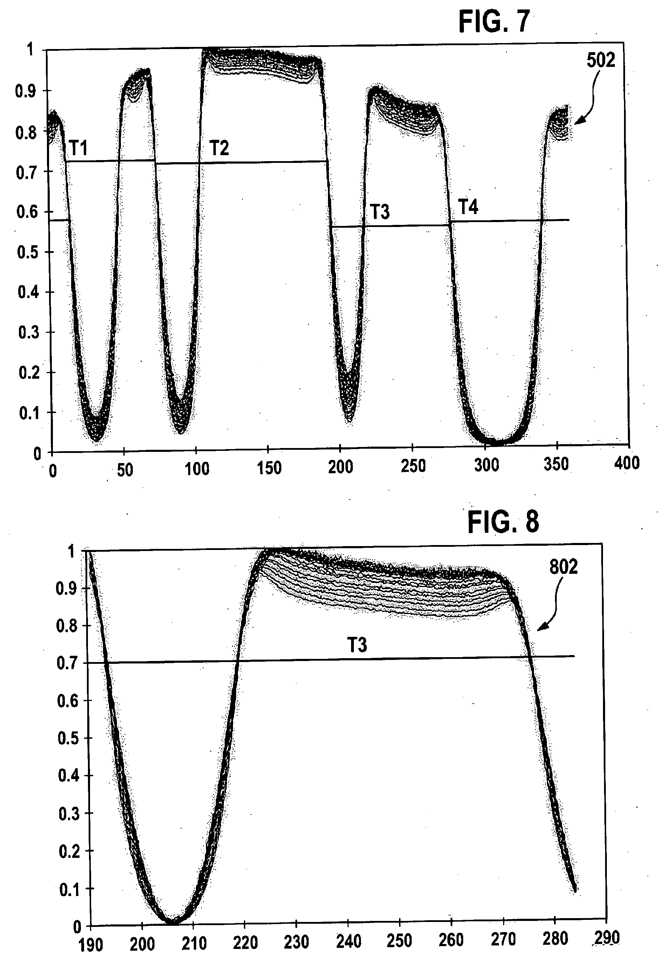

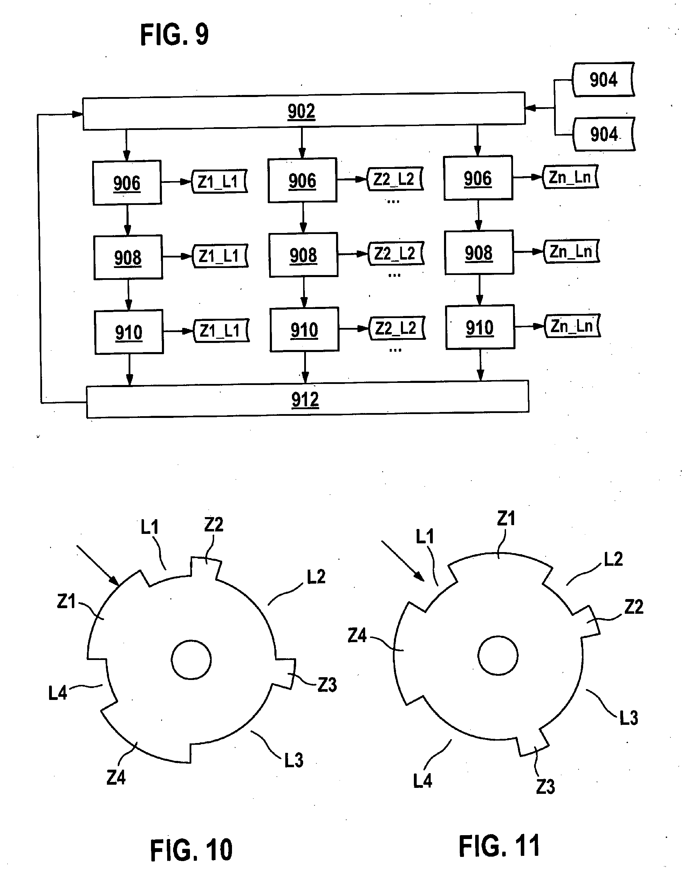

Mit anderen Worten zeigt Fig. 1 ein exemplarisches Ablaufdiagramm eines Auswertungsalgorithmus oder Erkennungsschwellwert-Bestimmungsalgorithmus beispielsweise für Phasengeber bei Geberrädern mit Run-Out (Rundlaufabweichung). Dabei wird das Run-Out des Geberrades oder einer Zahnstange, also allgemein gesprochen eines Positionsgebers, berücksichtigt und damit ein genaueres Schaltverhalten ermöglicht. Als Schalten wird hierbei verstanden, dass eine Auswertung des Sensorsignals erfolgt, derart, dass erkannt wird, dass das Sensorsignal einen Schwellwert über- oder unterschreitet. Als Run-Out wird die unterschiedliche Ausprägung von Zähnen und Lücken bezeichnet. Der hier vorgestellte Algorithmus speichert beispielsweise für jedes Zahn-Lückenpaar einen eigenen Schwellwert ab. Für beispielsweise jedes Zahn-Lücken-Paar wird dann eine günstigerweise einheitliche Schaltschwelle in x% der jeweiligen ZahnLücken-Amplitude (bezogen auf den Signalpegel, der einen Zahn oder eine Lücke repräsentiert) verwendet. Hierfür wird die Anzahl der Zähne in einem Speicher hinterlegt. Nach dem Power-On startet der Sensor mit einer B@TPO-Schaltschwelle als Initialschwellwert. Beim Start ist unbekannt, welcher konkrete Zahn bzw. welche konkrete Lücke vor dem Sensor steht. Die B@TPO-Schaltschwelle wird dabei als Startschaltschwelle für alle Zähne verwendet. Da der Startpunkt des Geberrades oder der Zahnstange unbekannt ist, wird die jeweilige Zuordnung der Zähne und Lücken beim Start neu definiert. Jeweils das erste gültige Maximum und Minimum, bzw. Maximum und Minimum, bilden zusammen ein Paar. Es kann sich dabei somit um ein Zahn-Lücken-Paar oder einem Lücken-Zahn-Paar handeln. Der Algorithmus wird nun so optimiert, dass die definierte Schaltschwelle in x% der Amplitude nicht für die gesamte Geberradumdrehung oder Zahnstangenbewegung gilt, sondern für ein bestimmtes Zahn-Lücken-Paar. Hierbei wird für jeweils ein Zahn-Lückenpaar das Maximum und Minimum detektiert und die Schaltschwelle für x% der Amplitude berechnet. Für jedes Zahn-Lückenpaar wird somit ein anderer absoluter Schaltpunkt in mT berechnet. Für das in Fig. 10 und Fig. 11 dargestellte 4-Zahn-Geberrad werden wie in Fig. 7 dargestellt vier unterschiedliche Schaltschwellen T1 bis T4 berechnet, die in diesem Beispiel jeweils 70% der Amplitude der jeweiligen Zahn-Lücken-Paare entsprechen. Auf diese Weise bildet die individuelle Schaltschwelle auch das Run-Out eines Zahnes ab. Die beiden größten Zähne Z1 und Z2 haben entsprechend eine absolut höhere Schaltschwelle.

Fig. 2 zeigt ein Fahrzeug mit einer Vorrichtung zur Bestimmung einer aktuellen Position von Zähnen und/oder Zahnlücken eines Positionsgebers gemäß einem Ausführungsbeispiel der vorliegenden Erfindung. Die Vorrichtung weist eine Einrichtung 210 zum Einlesen, eine Einrichtung 220 zum Ermitteln, eine Einrichtung 230 zum Berechnen, sowie eine Einrichtung 240 zum Bestimmen auf. Das Fahrzeug weist einen Motor 250 mit einem angeflanschten Geberrad, einen Magnetfeldsensor 260, sowie eine Motorsteuerung 270 auf. Das Geberrad am Motor 250 dreht sich in einer Drehbewegung einer Achse des Motors 250. Dabei verändern Zähne und Lücken auf dem Geberrad ein Magnetfeld um den Magnetfeldsensor 260. Der Magnetfeldsensor 260 stellt ein Signal bereit, das diese Veränderung des Magnetfelds wiedergibt. Die Einrichtung 210 zum Einlesen liest dieses Signal ein. Die Einrichtung 220 zum Ermitteln ermittelt einen Wert auf der Basis eines minimalen Wertes des Sensorsignals und einen Wert auf der Basis eines maximalen Wertes des Sensorsignals innerhalb eines vordefinierten Zeitintervalls aus dem Sensorsignal. In der Einrichtung 230 zum Berechnen wird ein Differenzbetragwert berechnet, der einen vorbestimmten Prozentsatz von einer Differenz zwischen dem Wert auf der Basis des zumindest einen maximalen Werts und einem Wert auf der Basis des zumindest einen minimalen Werts des Sensorsignals repräsentiert. In der Einrichtung 240 zum Bestimmen wird die Erkennungsschwelle derart bestimmt, so dass die Erkennungsschwelle einen Wert repräsentiert, der einem Ergebnis einer Addition des Differenzbetragwerts mit dem Wert auf der Basis des minimalen Werts des Sensorsignals entspricht. Dieser Vorgang wird beispielsweise für jedes Zahn-Lücke- bzw. Lücke-Zahn-Paar wiederholt.

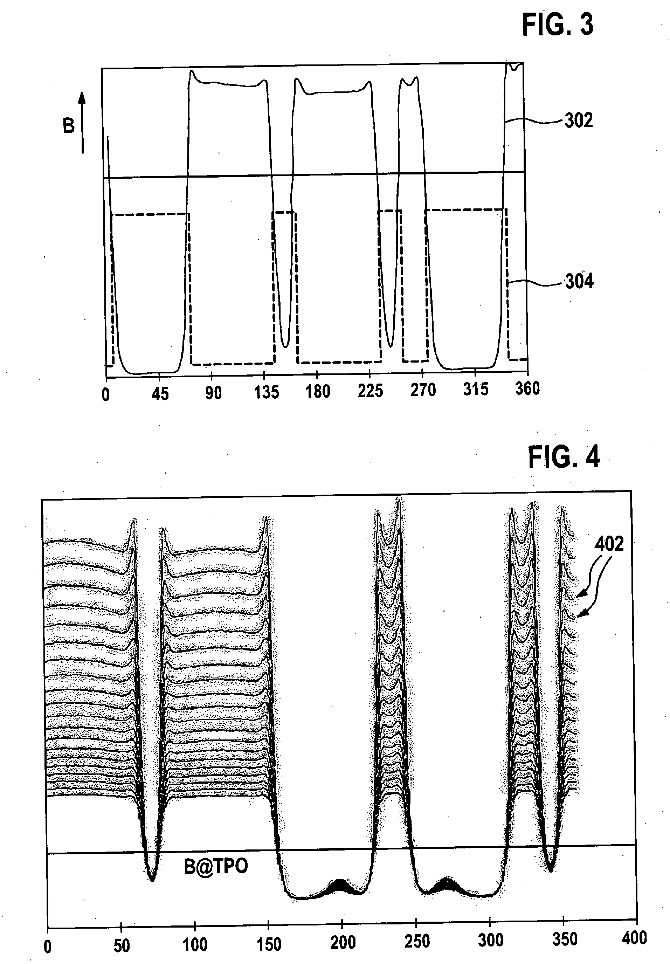

Fig. 3 zeigt ein Diagramm eines Signalverlaufs 302 einer magnetischen Flussdichte über einen Drehwinkel. Auf der Abszisse ist der Drehwinkel in Grad angetragen, auf der Ordinate eine dimensionslose magnetische Flussdichte B. Zusätzlich verkörpert die Ordinate einen Signalpegel eines Ausgangssignals 304, der einer Überschreitung oder Unterschreitung der magnetischen Flussdichte über oder unter eine Schwelle entspricht. Der Signalverlauf 302 der Flussdichte gibt eine Abfolge von Zähnen und Lücken eines Geberrads über den Drehwinkel des Geberrads wieder, wie er von einem Magnetfeldsensor aufgenommen wird.

Dabei beeinflusst ein Abstand der Zähne bzw. Lücken vom Sensor die magnetische Flussdichte am Sensor und eine Erfassung der Geberradgeometrie durch einen Phasengeber. Wenn die Flussdichte eine vorgegebene Schaltschwelle übersteigt, beispielsweise 70% eines Maximalwerts, so ändert das Ausgangssignal 304 seinen Pegel. Damit gibt das Ausgangssignal 304 die Abfolge von Zähnen und Lücken auf dem Geberrad über den Drehwinkel [°CAM] in binärer Form wieder. Das in Fig. 3 dargestellte Beispiel arbeitet mit umgekehrter Logik, d.h. ein Zahn wird als eine logische "0" ausgegeben und eine Lücke als logische "1".

Fig. 4 zeigt ein Diagramm mehrerer Signalverläufe 402 magnetischer Flussdichte oder Magnetfeldkennlinien über einen Drehwinkel. Auf der Abszisse ist der Drehwinkel in Grad aufgetragen, auf der Ordinate die magnetische Flussdichte. Die einzelnen Signalverläufe 402 weisen einen ähnlichen Verlauf auf, da sie die selben Zähne oder Zahnlücken repräsentieren, die jedoch in unterschiedlichen Zyklen bei der Umdrehung, d.h. zu unterschiedlichen Zeitpunkten jedoch an der gleichen Winkelposition aufgenommen wurden. Veränderungen der Flussdichte treten bei gleichen Winkelpositionen auf, sind aber unterschiedlich stark ausgeprägt. Die Signalverläufe 402 repräsentieren je ein unterschiedliches Maß eines Luftspalts zwischen magnetfeldverändernden Zähnen und Zwischenräumen eines Geberrads und einem Magnetfeldsensor. In dem Diagramm ist ein Schwellwert B@TPO, der größer ist als die in allen dargestellten Fällen tiefsten Punkte auf allen Kurven 402. Damit kann über einen Vergleich der Signal-Verläufe 402 mit diesem (Schwell-) Wert eine sichere Erkennung der Lücken zwischen den Zähnen auf dem Geberrad erfolgen.

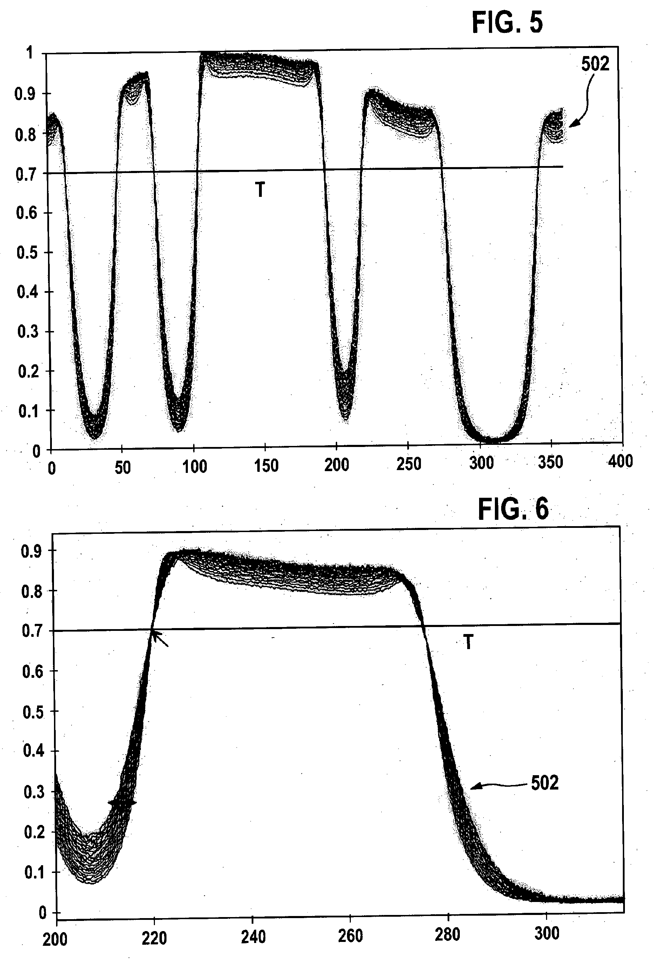

Fig. 5 zeigt ein Diagramm mehrerer Signalverläufe 502 magnetischer Flussdichte über einen Drehwinkel mit einer einheitlichen Schwelle T für alle Zähne. Auf der Abszisse ist der Drehwinkel in Grad aufgetragen, auf der Ordinate eine dimensionslose, normierte magnetische Flussdichte. Die Signalverläufe 502 bilden ein Magnetfeld eines Geberrades über einen Umlauf ab. Dabei zeigen sich Zähne oder Nocken auf dem Geberrad als hoher Signalpegel und Lücken als niedriger Signalpegel. Die Abbildung zeigt die normierten Signalverläufe bei verschiedenen Luftspalten. Dabei weisen die hohen Signalpegel über einen Winkelumlauf von 360° eine Variation um annähernd 20% auf, bezogen von einem maximalen hohen Signalpegel zu einem minimalen hohen Signalpegel auf. Zwischen den Zähnen und den Lücken weisen die Verläufe 502 Signalflanken auf. In dem Diagramm ist ein Schwellenwert bei 70% des Maximalwerts eingetragen. An diesem Schwellenwert erfolgt eine Winkelauswertung bei Kurvendurchgang. Aufgrund der Signalflankensteilheit ergibt sich ein Winkelfehler bei einer Erkennung zwischen den Zähnen, die durch einen hohen Signalpegel repräsentiert sind und Zähnen, die durch einen niedrigen Signalpegel repräsentiert sind.

Bei der Geberradbewertung wird im Allgemeinen nur ein Individuum eines Geberrades geprüft. Auf Grund von Alterung und Fabrikationstoleranzen kann es zu einer Verschlechterung des Run-Outs (also des Rundlaufs) kommen. So liegt in Fig. 5 das Maximum des Signals für den größten Zahn bei 1 (normiert), während das Signal für den kleinsten Zahn nur 80% (normiert) des Maximums erreicht. Die Verwendung einer einheitlichen Schwelle (T) für alle Luftspalte führt dazu, dass bei großem Run-Out aus Sicherheitsgründen eine wesentlich geringere Schaltschwelle z.B. 50% verwendet werden muss. Fig. 5 zeigt ein solches Signal bei der Verwendung eines Geberrads. Die Verwendung der 70%-Schaltschwelle kann problematisch sein, wenn der schlechteste Zahn mit derzeit 80% der normierten maximalen Signalamplitude auf Grund weiterer Toleranzen kleiner wird. Unterschreitet er die Schwelle von 70% der normierten maximalen Signalamplitude, so wird der Zahn ganz oder teilweise nicht mehr erkannt. Phasengeber sollten in Zukunft robuster gegenüber Run-Outs sein. Dies kann u.a. durch die Verwendung von höher tolerierten Geberrädern erreicht werden. Gleichzeitig soll die Genauigkeit des Sensors erhalten bleiben.

Für jedes Geberrad und ggf. für jedes Zahn-Lücke-Paar gibt es eine optimale Schaltschwelle von z.B. 70%. Bei dieser optimalen Schaltschwelle ist die Luftspaltabhängigkeit am geringsten. Im aktuellen Beispiel wird nur für das größte Zahn-Lücke-Paar die Schaltschwelle optimal gewählt, so dass für die anderen Zähne Fehler bei der Bestimmung der Position auftreten, insbesondere wenn sich der Luftspalt verändert.

Fig. 6 zeigt am Beispiel eines Signalverlaufs für einen Zahn aus Fig. 5 die optimale Höhe des Schwellenwerts. Die Schar der Signalverläufe weist ein Streuungsband auf, das in bestimmten Bereichen des Verlaufs breiter ist, als in anderen Bereichen. Beispielsweise ist das Streuungsband im Bereich um niedrige Pegel breiter, als im Bereich um höhere Pegel, wie 70% der normierten maximalen Signalamplitude. Im Bereich um höchste Pegel um 90% der normierten maximalen Signalamplitude weist das Streuungsband erneut eine größere Breite auf. Daher ist es vorteilhaft in diesem Beispiel den Schwellenwert im Bereich um 70% der normierten maximalen Signalamplitude festzulegen. Dort ergibt sich ein minimaler Winkelfehler verglichen mit beispielsweise dem Bereich um 25% der normierten maximalen Signalamplitude. Daraus resultiert eine bessere Wiederholgenauigkeit über verschiedene Luftspalte des Geberrads. Der Wert von 70 % der normierten maximalen Signalamplitude kann jedoch je nach Streuungsbreite anders ausfallen. Hierzu können Messungen der Streuungsbreite des Sensorsignals durchgeführt werden und die nachfolgend näher beschriebenen Signalschwellen derart festgelegt werden, dass die Schwelle auf einen Wert festgelegt wird, an dem die Streuungsbreite des Sensorsignals minimal ist.

Mit anderen Worten zeigt Fig. 6 eine sehr geringe Luftspaltabhängigkeit bei 70%-Schaltschwelle und eine hohe Luftspaltabhängigkeit bei 25%-Schaltschwelle (im Bereich des Doppelpfeils in Fig. 6). Die Schwelle kann dabei so gewählt werden, dass die Luftspaltabhängigkeit minimiert wird. Die Luftspaltabhängigkeit beschreibt die Verschiebung des Schaltpunktes in Abhängigkeit vom Luftspalt. So beträgt bei einer Schwelle von 25% der normierten maximalen Signalamplitude in Fig. 6 die Luftspaltabhängigkeit ca. 4° CAM, während die Abhängigkeit bei 70% der normierten maximalen Signalamplitude nur 0,2° CAM beträgt. Für den Einsatz im Fahrzeug ist eine Minimierung der Luftspaltabhängigkeit erforderlich, damit die Schaltflanke bei Änderung des Luftspaltes gleich bleibt.

Fig. 7 zeigt eine Darstellung einer Anwendung eines optimalen Schwellenwerts für jeden Zahn des Geberrads gemäß einem Ausführungsbeispiel der vorliegenden Erfindung. Die Signalverläufe 502 entsprechen der Darstellung in Fig. 5. Im Gegensatz zu Fig. 5 weist jeder einzelne Zahn einen optimierten unterschiedlichen Schwellenwert T1, T2, T3 bzw. T4 als Schaltschwelle für die Winkelerkennung auf. Diese Schwellenwerte können beispielsweise so berechnet werden, dass die Streuungsbreite des Sensorsignals für die Erkennung eines Zahns und/oder einer Lücke gemäß den vorstehenden Ausführungen, insbesondere über Luftspalt, minimal ist. Dies führt dazu, dass die Schaltschwelle für einen Zahn mit niedrigerem Signalpegel niedriger liegt als die Schaltschwelle für einen Zahn mit hohem Signalpegel. Damit ergibt sich ein geringerer Winkelfehler in der Positionserkennung der einzelnen Zähne und winkelabhängige Prozesse können exakter angesteuert werden. Fig. 7 zeigt unterschiedliche absolute Schaltschwellen T1, T2, T3 bzw. T4 für jedes Zahn-Lücken-Paar oder Lücken-Zahn-Paar. Für die Umsetzung des Algorithmus zur Bestimmung der Position von Zähnen und Zahnlücken ist das Abspeichern der Zahn-/Lückenzahl vorteilhaft. Dies kann durch Programmierung des Sensors vor der Auslieferung an den Kunden geschehen.

Fig. 8 zeigt ein Beispiel für eine individuelle Festlegung eines Schwellenwerts, vorliegend des Schwellwerts T3, an einem einzelnen Zahn aus Fig. 7 gemäß einem Ausführungsbeispiel der vorliegenden Erfindung. Dafür ist der Zahn bzw. der Übergang zwischen einer Lücke und einem Zahn repräsentiert durch einen minimalen Pegel in der Lücke vor dem Zahn bis zu einem maximalen Pegel im Verlauf des Zahns mit einem normierten relativen magnetischen Fluss von null bis eins dargestellt. Die Signalverläufe 802 weisen bei 0,7 in der ansteigenden Signalflanke einen Punkt minimaler Streubreite auf. An diesem Punkt erfolgt günstigerweise die Festlegung des individuellen Schwellenwerts T3 für den Zahn 3. Damit kann der Zahn über viele Umdrehungen des Geberrads an der gleichen Position erfasst werden.

Zur besseren Verdeutlichung der Leistungsfähigkeit zeigt Fig. 8 eine normierte Darstellung eines Signalverlaufes für ein Zahn-Lückenpaar. Es ist ersichtlich, dass die Wahl für die individuelle Schaltschwelle T3 von vorliegend 70% der normierten Signalamplitude sehr gute Ergebnisse liefert.

Ist nun durch die vorhergehenden Schritte erkannt worden, dass der erste und zweite Übergang vorliegt, kann beispielsweise unter Kenntnis der Anzahl der Zähne und/oder Zahnlücken bestimmt werden, welche Position des Positionsgeber aktuell eingenommen hat. Hierzu kann beispielsweise ausgenutzt werden, dass bestimmte Zähne und/oder Lücken an bestimmten Winkeln der Positionen des Positionsgebers angeordnet sind, so dass die Kenntnis, welcher Zahn und/oder welche Zahnlücke gerade unmittelbar vor dem Sensor liegt, einen Rückschluss auf die aktuelle Position des Positionsgebers ermöglicht.

Fig. 9 zeigt ein Ablaufdiagramm eines Verfahrens zur Bestimmung einer individuellen Schaltschwelle von Zähnen und/oder Zahnlücken eines Positionsgebers als Algorithmusbeschreibung gemäß einem Ausführungsbeispiel der vorliegenden Erfindung. An einem Start 902 des Verfahrens werden aus einem Speicher 904 eine Anzahl der Zähne n eines verwendeten Geberrads oder einer Zahnstange und eine Minimalschwelle B@TPO ausgelesen. Für jeden der Zähne eins bis n wird in einem Schritt 906 des Ladens die Minimalschwelle in einen individuellen Speicher Z1_L1, Z2_L2, bis Zn_Ln geladen. Damit wird ein Unterschied zwischen Zahn und Lücke oder auch zwischen Lücke und Zahn sicher erkannt. In einem schnellen Lernalgorithmus 908 für Zahn-Lücke (oder auch Lücke-Zahn) Z1_L1 bis Zn_Ln wird die Erkennungsgenauigkeit innerhalb einer bis weniger Umdrehungen des Geberrads oder Bewegungen der Zahnstange verbessert. Dabei wird ein Schwellwert für einen den Zahn repräsentierenden Signalpegel auf eine Amplitude des Signals beim Vorliegen eines Zahns am Sensor angepasst. Dieser Schwellwert wird je Zahn in dem Speicher Z1_L1, Z2_L2, bis Zn_Ln abgelegt. Anschließend kann in einem langsamen Lernalgorithmus 910 für Zahn-Lücke (oder auch Lücke-Zahn) Z1_L1 bis Zn_Ln eine Verbesserung des Schwellwerts über viele (beispielsweise mehr als 5) Umdrehungen des Geberrads oder Bewegungszyklen der Zahnstange erfolgen. Dabei wird der Schwellwert pro Zahn anhand einer Entwicklung der individuellen Signalamplitude, die den entsprechen Zahn repräsentiert über mehrere zurückliegende Umdrehungen oder Bewegungen angepasst. Der verbesserte Schwellwert wird in die Speicher Z1_L1, Z2_L2, bis Zn_Ln geschrieben. Durch eine Unterbrechung des Verfahrens aus unterschiedlichen Gründen, wie ein Neustart des Verfahrens nach einem Spannungsabfall oder einem Ausschalten des Sensors oder der Zahnstange erfolgt ein Reset 912 des Sensors und ein erneuter Start 902.

Der Sensor startet somit zunächst mit der initialen B@TPO-Schaltschwelle (d.h. Initialschwellwert) und lernt dann für jedes Zahn-Lückenpaar (Lücken-Zahnpaar) unabhängig zu einer neuen Schaltschwelle. Dementsprechend wird als erste Schaltschwelle für jedes Zahn-Lückenpaar, also für die erste Umdrehung oder Bewegungen, die B@TPO-Schaltschwelle (auch als Initialschwellwert bezeichnet) verwendet. Der Lernalgorithmus selber besteht beispielsweise aus einem schnellen Lernalgorithmus und einem konservativen Lernalgorithmus im Running Mode. Erster ist günstig, um möglichst schnell die optimale Schaltschwelle zu erreichen, letzterer um robust gegen Störungen zu sein. Für jedes Zahn-Lücken-Paar wird der gleiche Algorithmus, jedoch unabhängig voneinander, eingesetzt. Kommt es zu einem Reset, so beginnt der Sensor wieder mit dem Einlesen der Zahnzahl und der B@TPO-Schaltschwelle.

Fig. 10 zeigt ein Ausführungsbeispiel eines Geberrades mit einer Nummerierung der Zähne und Lücken des Geberrades gemäß einem Ausführungsbeispiel der vorliegenden Erfindung. Eine Position eines Sensors ist mit einem Pfeil markiert. Dem Sensor gegenüber steht ein Zahn. Bei einem Start des Verfahrens gemäß einem Ausführungsbeispiel erhält dieser Zahn die Bezeichnung Z1. Dreht sich das Geberrad unter dem Sensor weg und eine erste Lücke erreicht den Sensor, so erhält die erste Lücke die Bezeichnung L1. Zusammen mit dem ersten Zahn Z1 ergibt sich dadurch ein erstes Zahn-Lücke-Paar Z1_L1. Erreicht ein zweiter Zahn den Sensor, so erhält der zweite Zahn die Bezeichnung Z2. Ebenso erhält die zweite Lücke die Bezeichnung L2. Zusammen ergeben der zweite Zahn Z2 und die zweite Lücke L2 das zweite Zahn-Lücke-Paar Z2_L2. Analog wird mit den folgenden Zähnen und Lücken verfahren, bis eine vorab hinterlegte Anzahl von Zähnen und Lücken des Geberrads unter dem Sensor durchgelaufen ist. Dann steht der Sensor erneut vor dem Zahn Z1. Für jedes Zahn-Lücke-Paar Z1_L1 bis Zn_Ln wird bei einen Sprung eines Sensorsignals von einem hohen Pegel auf einen niedrigen Pegel und wieder zurück eine Bestimmung eines optimalen Schwellenwerts T durchgeführt, um jeweils den exakten Zeitpunkt während der Drehung zu bestimmen, an dem Zahn und Lücke wechseln. Das geschieht dann unabhängig von Rundlaufabweichungen. Alternativ kann auch eine Bestimmung des Übergangs von einer Lücke auf einen in Drehungs- oder Bewegungsrichtung des Positionsgebers nachgelagerten Zahn unter Verwendung. In diesem Fall wären dann, wie vorstehend detailliert beschrieben, die einzelnen Sprünge von einer Lücke zu einem Zahn zur Optimierung des Schwellwertes oder zur Bestimmung eines Übergangs zwischen Lücke und Zahn zu verwenden.

Fig. 11 zeigt ein weiteres Ausführungsbeispiel eines Geberrades mit einer weiteren Nummerierung der Zähne und Lücken des Geberrades gemäß einem Ausführungsbeispiel der vorliegenden Erfindung. Eine Position eines Sensors ist mit einem Pfeil markiert. Dem Sensor gegenüber steht einer Lücke. Bei einem Start des Verfahrens gemäß einem Ausführungsbeispiel der vorliegenden Erfindung erhält diese Lücke die Bezeichnung L1. Dreht sich das Geberrad unter dem Sensor weg und ein erster Zahn erreicht den Sensor, so erhält der erste Zahn die Bezeichnung Z1. Zusammen mit der ersten Lücke L1 ergibt sich dadurch ein erstes Lücke_Zahn-Paar L1_Z1. Erreicht eine zweite Lücke den Sensor, so erhält die zweite Lücke die Bezeichnung L2. Ebenso erhält der zweite Zahn die Bezeichnung Z2. Zusammen ergeben die zweite Lücke L2 und der zweite Zahn Z2 das zweite Lücke-Zahn-Paar L2_Z2. Analog wird mit den folgenden Lücken und Zähnen verfahren, bis eine vorab hinterlegte Anzahl von Lücken und Zähnen des Geberrads unter dem Sensor durchgelaufen ist. Dann steht der Sensor erneut vor der Lücke L1. Für jedes Lücke-Zahn-Paar L1_Z1 bis Ln_Zn wird bei einen Sprung eines Sensorsignals von einem niedrigen Pegel auf einen hohen Pegel und wieder zurück eine Bestimmung eines optimalen Schwellenwerts T durchgeführt, um jeweils den exakten Zeitpunkt während der Drehung zu bestimmen, an dem Lücke und Zahn wechseln. Das geschieht dann unabhängig von Ründlaufabweichungen.

## Patentansprüche

1. Verfahren (100) zur Bestimmung einer ersten und einer zweiten Erkennungsschwelle (T1, T2, T3, T4) zur Erkennung eines Vorliegens von Zähnen oder Zahnlücken eines Positionsgebers vor einem Sensor (260), wobei das Verfahren folgenden Schritte aufweist:
Einlesen (110) eines Sensorsignals (502), das einen zeitlichen Verlauf eines gemessenen Magnetfeldes repräsentiert, wenn Zähne und Zahnlücken des Positionsgebers an dem Sensor (260) vorbeigeführt werden;
**dadurch gekennzeichnet, dass** das Verfahren außerdem die folgenden Schritte aufweist:
Ermitteln (120) eines ersten Wertes auf der Basis eines minimalen Wertes des Sensorsignals (502) und eines ersten Wertes auf der Basis eines maximalen Wertes des Sensorsignals innerhalb eines vordefinierten Zeitintervalls aus dem Sensorsignal (502);
Berechnen (130) eines Differenzbetragwerts, der einen vorbestimmten Prozentsatz von einer Differenz zwischen dem ersten Wert auf der Basis des zumindest einen maximalen Werts und dem ersten Wert auf der Basis des zumindest einen minimalen Werts des Sensorsignales (502) repräsentiert; Bestimmen (140) der Erkennungsschwelle (T1, T2, T3, T4), so dass die Erkennungsschwelle einen Wert repräsentiert, der einem Ergebnis einer Addition des Differenzbetragwerts mit dem ersten Wert auf der Basis des minimalen Werts des Sensorsignals entspricht.
Ermitteln (150) eines zweiten Wertes auf der Basis eines minimalen Wertes des Sensorsignals (502) und eines zweiten Wertes auf der Basis eines maximalen Wertes des Sensorsignals (502) innerhalb eines dem vordefinierten Zeitintervall nachfolgenden zweiten vordefinierten Zeitintervalls aus dem Sensorsignal;
Berechnen (160) eines zweiten Differenzbetragwerts, der einem zweiten vorbestimmten Prozentsatz von einer Differenz zwischen dem zweiten Wert auf Basis des maximalen Werts und dem zweiten Wert auf der Basis des minimalen Werts des Sensorsignals (502) repräsentiert; und
Bestimmen (170) einer von der ersten Erkennungsschwelle (T1; T2; T3) unterschiedlichen zweiten Erkennungsschwelle (T2, T3, T4), so dass die zweite Erkennungsschwelle (T2, T3, T4) einen Wert repräsentiert, der einem Ergebnis einer Addition des zweiten Differenzbetragwerts mit dem zweiten Wert auf der Basis des minimalen Wertes des Sensorsignals (502) entspricht.

2. Verfahren (100) gemäß Anspruch 1, **dadurch gekennzeichnet, dass** im Schritt des Berechnens (160) des zweiten Differenzbetragwerts als zweiter vorbestimmter Prozentsatz ein Wert verwendet wird, der dem vorbestimmten Prozentsatz entspricht, der im Schritt des Berechnens (130) des Differenzbetragwerts verwendet wird.

3. Verfahren (100) gemäß einem der vorangegangenen Ansprüche, **dadurch gekennzeichnet, dass** im Schritt des Ermittelns (120) der erste Wert auf der Basis des minimalen Wertes des Sensorsignals und/oder der erste Wert auf der Basis des maximalen Wertes des Sensorsignals (502) und/oder im Schritt des Ermittelns (150) der zweite Wert.auf der Basis des minimalen Wertes und/oder der zweiten Wert auf der Basis des maximalen Wertes dann verworfen wird, wenn eine Differenz zwischen dem ersten Wert auf der Basis des minimalen Wertes und dem ersten Wert auf der Basis des maximalen Wertes und/oder eine Differenz zwischen dem zweiten Wert auf der Basis des minimalen Wertes und dem zweiten Wert auf der Basis des maximalen Wertes kleiner als ein vorbestimmter Differenzschwellwert ist.

4. Verfahren (100) gemäß einem der vorangegangenen Ansprüche, wobei ein Positionsgeber mit einer Anzahl von n Zähnen in Kombination mit dem Sensor verwendet wird, **dadurch gekennzeichnet, dass** im Schritt des Einlesens (110) ein Sensorsignal (502) mit einer Mehrzahl von Gruppen von kleinen Werten und einer Mehrzahl von Gruppen von großen Werten eingelesen wird und wobei im Schritt des Ermittelns (120) der Wert auf der Basis eines minimalen Wertes des Sensorsignals durch eine Mittelwertbildung der minimalen Werte jeder n-ten Gruppe von kleinen Werten und der Wert auf der Basis eines maximalen Wertes des Sensorsignals durch eine Mittelwertbildung der maximalen Werte jeder n-ten Gruppe von großen Werten erfolgt.

5. Verfahren (100) gemäß einem der vorangegangenen Ansprüche, **dadurch gekennzeichnet, dass** nach dem Schritt des Bestimmens (140) ferner ein Schritt des Detektierens eines Zahns des Positionsgebers vorgesehen ist, wenn das Sensorsignal (502) einen Wert aufweist, der größer ist, als die Erkennungsschwelle (T1; T2; T3) oder die zweite Erkennungsschwelle (T2; T3; T4).

6. Vorrichtung zur Bestimmung einer Erkennungsschwelle zur Erkennung eines Vorliegens eines Zahns oder einer Zahnlücke eines Positionsgebers vor einem Sensor (260), wobei die Vorrichtung die folgenden Merkmale aufweist:
eine Schnittstelle (210) zum Einlesen eines Sensorsignals, das einen zeitlichen Verlauf eines gemessenen Magnetfeldes repräsentiert, wenn Zähne und Zahnlücken des Positionsgebers an dem Sensor (260) vorbeigeführt werden;
**gekennzeichnet, durch**
eine Einheit (220) zum Ermitteln eines ersten Wertes auf der Basis eines minimalen Wertes des Sensorsignals und eines ersten Wertes auf der Basis eines maximalen Wertes des Sensorsignals innerhalb eines vordefinierten Zeitintervalls aus dem Sensorsignal und zum Ermitteln eines zweiten Wertes auf der Basis eines minimalen Wertes des Sensorsignals und eines zweiten Wertes auf der Basis eines maximalen Wertes des Sensorsignals (502) innerhalb eines dem vordefinierten Zeitintervall nachfolgenden zweiten vordefinierten Zeitintervalls aus dem Sensorsignal;
eine Einheit (230) zum Berechnen eines Differenzbetragwerts, der einen vorbestimmten Prozentsatz von einer Differenz zwischen dem Wert auf der Basis des zumindest einen maximalen Werts und einem Wert auf der Basis des zumindest einen minimalen Werts des Sensorsignals repräsentiert und zum Berechnen eines zweiten Differenzbetragwerts, der einem zweiten vorbestimmten Prozentsatz von einer Differenz zwischen dem zweiten Wert auf Basis des maximalen Werts und dem zweiten Wert auf der Basis des minimalen Werts des Sensorsignals repräsentiert; und
eine Einheit (240) zum Bestimmen der Erkennungsschwelle, so dass die Erkennungsschwelle einen Wert repräsentiert, der einem Ergebnis einer Addition des Differenzbetragwerts mit dem Wert auf der Basis des minimalen Werts des Sensorsignals entspricht und zum Bestimmen einer von der ersten Erkennungsschwelle unterschiedlichen zweiten Erkennungsschwelle, so dass die zweite Erkennungsschwelle einen Wert repräsentiert, der einem Ergebnis einer Addition des zweiten Differenzbetragwerts mit dem zweiten Wert auf der Basis des minimalen Wertes des Sensorsignals entspricht.

7. Computerprogrammprodukt mit Programmcode zur Durchführung eines der Verfahren gemäß einem der Ansprüche 1 bis 5, wenn das Computerprogramm auf einer Vorrichtung ausgeführt wird.

## Claims

1. Method (100) for determining a first and a second detection threshold (T1, T2, T3, T4) for detecting a presence of teeth or tooth gaps of a position encoder upstream of a sensor (260), the method having the following steps:
reading in (110) a sensor signal (502) which represents a time profile of a measured magnetic field when teeth and tooth gaps of the position encoder are guided past the sensor (260);
**characterized in that** the method further has the following steps:
determining (120) a first value on the basis of a minimum value of the sensor signal (502), and a first value on the basis of a maximum value of the sensor signal within a predefined time interval from the sensor signal (502);
calculating (130) an absolute difference value which represents a predetermined percentage of a difference between the first value on the basis of the at least one maximum value and the first value on the basis of the at least one minimum value of the sensor signal (502);
determining (140) the detection threshold (T1, T2, T3, T4) such that the detection threshold represents a value which corresponds to a result of an addition of the absolute difference value and the first value on the basis of the minimum value of the sensor signal;
determining (150) a second value on the basis of a minimum value of the sensor signal (502) and a second value on the basis of a maximum value of the sensor signal (502) within a second predefined time interval succeeding the predefined time interval from the sensor signal;
calculating (160) a second absolute difference value which represents a second predetermined percentage of a difference between the second value on the basis of the maximum value and the second value on the basis of the minimum value of the sensor signal (502); and
determining (170) a second detection threshold (T2, T3, T4) different from the first detection threshold (T1; T2; T3) such that the second detection threshold (T2, T3, T4) represents a value which corresponds to a result of an addition of the second absolute difference value and the second value on the basis of the minimum value of the sensor signal (502).

2. Method (100) according to Claim 1, **characterized in that** in the step of calculating (160) the second absolute difference value as second predetermined percentage, use is made of a value which corresponds to the predetermined percentage which is used in the step of calculating (130) the absolute difference value.

3. Method (100) according to one of the preceding claims, **characterized in that** in the determining step (120) the first value on the basis of the minimum value of the sensor signal, and/or the first value on the basis of the maximum value of the sensor signal (502), and/or in the determining step (150), the second value on the basis of the minimum value and/or the second value on the basis of the maximum value are/is then discarded when a difference between the first value on the basis of the minimum value and the first value on the basis of the maximum value and/or a difference between the second value on the basis of the minimum value and the second value on the basis of the maximum value is smaller than a predetermined difference threshold value.

4. Method (100) according to one of the preceding claims, a position encoder with a number of n teeth being used in combination with the sensor, **characterized in that** in the reading-in step (110), a sensor signal (502) with a multiplicity of groups of small values and a multiplicity of groups of large values are read in, and in the reading-in step (120) the value on the basis of a minimum value of the sensor signal being determined by averaging the minimum values of each nth group of small values, and the value on the basis of a maximum value of the sensor signal being determined by averaging the maximum values of each nth group of large values.

5. Method (100) according to one of the preceding claims, **characterized in that** after the determining step (140) a step of detecting a tooth of the position encoder is further provided when the sensor signal (502) has a value that is greater than the detection threshold (T1; T2; T3) or the second detection threshold (T2; T3; T4).

6. Device for determining a detection threshold for detecting the presence of a tooth or a tooth gap of a position encoder upstream of a sensor (260), the device having the following features:
an interface (210) for reading in a sensor signal that represents a time profile of a measured magnetic field when teeth and tooth gaps of the position encoder are guided past the sensor (260);
**characterized by**
a unit (220) for determining a first value on the basis of a minimum value of the sensor signal and a first value on the basis of a maximum value of the sensor signal within a predefined time interval from the sensor signal, and for determining a second value on the basis of a minimum value of the sensor signal and a second value on the basis of a maximum value of the sensor signal (502) within a second predefined time interval succeeding the predefined time interval from the sensor signal;
a unit (230) for calculating an absolute difference value which represents a predetermined percentage of a difference between the value on the basis of the at least one maximum value and a value on the basis of the at least one minimum value of the sensor signal, and for calculating a second absolute difference value which represents a second predetermined percentage of a difference between the second value on the basis of the maximum value and the second value on the basis of the minimum value of the sensor signal; and
a unit (240) for determining the detection threshold such that the detection threshold represents a value which corresponds to a result of an addition of the absolute difference value and the value on the basis of the minimum value of the sensor signal, and for determining a second detection threshold different from the first detection threshold such that the second detection threshold represents a value which corresponds to a result of an addition of the second absolute difference value and the second value on the basis of the minimum value of the sensor signal.

7. Computer program product with program code for carrying out one of the methods according to one of Claims 1 to 5 when the computer program product is executed on an apparatus.

## Revendications

1. Procédé (100) pour la détermination de premier et second seuils d'identification (T1, T2, T3, T4) pour identifier une présence de dents ou d'espaces entre dents d'un générateur de position placé en face d'un capteur (260), dans lequel le procédé comprend les étapes consistant à :
lire (110) un signal de capteur (502) qui représente une évolution temporelle d'un champ magnétique mesuré lorsque des dents et des espaces entre dents du générateur de position sont amenés à passer devant le capteur (260) ;
**caractérisé en ce que** le procédé comprend en outre les étapes consistant à :
obtenir (120) une première valeur basée sur une valeur minimale du signal de capteur (502) et une première valeur basée sur une valeur maximale du signal de capteur au cours d'un intervalle de temps prédéfini à partir du signal de capteur (502) ;
calculer (130) une valeur de différence qui représente un pourcentage d'une différence entre la première valeur basée sur l'au moins une valeur maximale et la première valeur basée sur l'au moins une valeur minimale du signal de capteur (502) ;
déterminer (140) le seuil d'identification (T1, T2, T3, T4), de manière à ce que le seuil d'identification représente une valeur qui correspond à un résultat d'une addition de la valeur de différence à la première valeur déterminée sur la base du signal de capteur ;
obtenir (150) une seconde valeur basée sur une valeur minimale du signal de capteur (502) et une seconde valeur basée sur une valeur maximale du signal de capteur (502) au cours d'un second intervalle de temps prédéfini faisant suite à l'intervalle de temps prédéfini, à partir du signal de capteur ;
calculer (160) une seconde valeur de différence qui représente un second pourcentage d'une différence entre la seconde valeur basée sur la valeur maximale et la seconde valeur basée sur la valeur minimale du signal de capteur (502) ; et
déterminer (170) un second seuil d'identification (T2, T3, T4) différent du premier seuil d'identification (T1 ; T2 ; T3) de manière à ce que le second seuil d'identification (T2, T3, T4) représente une valeur qui correspond à un résultat d'une addition de la seconde valeur de différence à la seconde valeur basée sur la valeur minimale du signal de capteur (502).

2. Procédé (100) selon la revendication 1, **caractérisée en ce que**, lors de l'étape de calcul (160) de la seconde valeur de différence en tant que second pourcentage prédéterminé, on utilise une valeur qui correspond au pourcentage prédéterminé utilisé lors de l'étape de calcul (130) de la valeur de différence.

3. Procédé (100) selon l'une quelconque des revendications précédentes, **caractérisé en ce que**, lors de l'étape d'obtention (120), la première valeur basée sur la valeur minimale du signal de capteur et/ou la première valeur basée sur la valeur maximale du signal de capteur (502) et/ou lors de l'étape d'obtention (150), la seconde valeur basée sur la valeur minimale et/ou la seconde valeur basée sur la valeur maximale n'est rejetée que lorsqu'une différence entre la première valeur basée sur la valeur minimale et la première valeur basée sur la valeur maximale et/ou lorsqu'une différence entre la seconde valeur basée sur la valeur minimale et la seconde valeur basée sur la valeur maximale est inférieure à une valeur de seuil de différence prédéterminée.

4. Procédé (100) selon l'une quelconque des revendications précédentes, dans lequel un générateur de position comprenant un nombre n de dents est utilisé en association avec le capteur, **caractérisée en ce que**, lors de l'étape de lecture (110), un signal de capteur (502) comprenant une pluralité de groupes de faibles valeurs et une pluralité de groupes de valeurs élevées est lu et dans lequel, lors de l'étape d'obtention (120), la valeur basée sur une valeur minimale du signal de capteur est obtenue par un calcul de valeur moyenne des valeurs minimales de chaque n-ème groupe de faibles valeurs et la valeur basée sur une valeur maximale du signal de capteur est obtenue par un calcul de valeur moyenne des valeurs maximales de chaque n-ème groupe de valeurs élevées.

5. Procédé (100) selon l'une quelconque des revendications précédentes, **caractérisé en ce que**, après l'étape de détermination (140), il est en outre prévu une étape consistant à détecter une dent du générateur de position, lorsque le signal de capteur (502) présente une valeur qui est supérieure au seuil d'identification (T1 ; T2 ; T3) ou au second seuil d'identification (T2 ; T3 ; T4).

6. Dispositif pour la détermination d'un seuil d'identification destiné à identifier une présence d'une dent ou d'un espace entre dents d'un générateur de position placé devant un capteur (260), dans lequel le dispositif présente les caractéristiques suivantes :
une interface (210) destinée à lire un signal de capteur qui représente une évolution temporelle d'un champ magnétique mesuré lorsque les dents et les espaces entre dents du générateur de position sont amenés à passer devant le capteur (260) ;
**caractérisé par**
une unité (220) destinée à obtenir une première valeur basée sur une valeur minimale du signal de capteur et une première valeur basée sur une valeur maximale du signal de capteur au cours d'un intervalle de temps prédéfini à partir du signal de capteur et à obtenir une seconde valeur basée sur une valeur minimale du signal de capteur et une seconde valeur basée sur une valeur maximale du signal de capteur (502) au cours d'un second intervalle de temps prédéfini faisant suite à l'intervalle de temps prédéfini à partir du signal de capteur ;
une unité (230) destinée à calculer une valeur de différence qui représente un pourcentage prédéterminé d'une différence entre la valeur basée sur l'au moins une valeur maximale et une valeur basée sur l'au moins une valeur minimale du signal de capteur et à calculer une seconde valeur de différence qui représente un second pourcentage prédéterminé d'une différence entre la seconde valeur basée sur la valeur maximale et la seconde valeur basée sur la valeur minimale du signal de capteur ; et
une unité (240) destinée à déterminer le seuil d'identification de manière à ce que le seuil d'identification représente une valeur qui correspond à un résultat d'une addition de la valeur de différence à la valeur basée sur la valeur minimale du signal de capteur et à déterminer un second seuil d'identification différent du premier seuil d'identification de manière à ce que le second seuil d'identification représente une valeur qui correspond au résultat d'une addition de la seconde valeur de différence à la seconde valeur basée sur la valeur minimale du signal de capteur.

7. Produit de programme informatique comprenant un code de programme destiné à mettre en oeuvre l'un des procédés selon l'une quelconque des revendications 1 à 5 lorsque le programme informatique est exécuté sur un dispositif.
